# EUROPÄISCHE PATENTSCHRIFT

(11) **EP 1 722 215 B1**
(45) Veröffentlichungstag und Bekanntmachung des Hinweises auf die Patenterteilung: **06.07.2011**
(21) Anmeldenummer: 06113598.4
(22) Anmeldetag: 05.05.2006
(51) Int. Cl.: G01N 21/88, G01N 21/896, G01N 21/95, G01M 11/00, B07C 5/12, B07C 5/34

(54) **Verfahren und Vorrichtung zum Detektieren von Blasen in einem Glaskörper sowie zur Herstellung von Glaskörpern**
Method and apparatus to detect bubbles in a glass object and for the manufacture of glass objects
Procédé et dispositif pour la détection de bulles dans un object en verre et pour la fabrication des objects en verre

(30) Priorität: 10.05.2005 DE 102005022271
(43) Veröffentlichungstag der Anmeldung: 15.11.2006
(73) Patentinhaber: Schott AG, 55122 Mainz (DE)
(72) Erfinder: Wiedenmann, Hans, 95676, Schönhaid/ Wiesau (DE); Eisner, Armin, 95666, Leonberg (DE)
(74) Vertreter: Blasberg, Tilo

(56) Entgegenhaltungen:
- EP-A- 0 497 649
- US-A- 5 355 213
- US-A- 5 627 638
- US-A1- 2002 163 638
- US-A1- 2003 218 145
- PATENT ABSTRACTS OF JAPAN Bd. 1997, Nr. 02, 28. Februar 1997 (1997-02-28) -& JP 08 261953 A (FUJI PHOTO FILM CO LTD), 11. Oktober 1996 (1996-10-11)

## Beschreibung

### GEBIET DER ERFINDUNG

Die vorliegende Erfindung betrifft allgemein die Herstellung von Glaskörpern, insbesondere von länglichen Glaskörpern, beispielsweise von stangen- oder rohrförmigen Glaskörpern, insbesondere in einem kontinuierlichen Herstellungsverfahren. Genauer gesagt betrifft die vorliegende Erfindung ein Verfahren und eine Vorrichtung zum Detektieren von Blasen und/oder Einschlüssen in einem solchen Glaskörper sowie zur Herstellung eines solchen Glaskörpers mit einer vorbestimmten maximalen Dichte von Blasen und/oder Einschlüssen. Ein weiterer Gesichtspunkt der vorliegenden Erfindung betrifft die Verwendung eines solchen Glaskörpers als Ausgangsmaterial zur Herstellung von Primärpackmitteln für pharmazeutische Anwendungen durch weitere Umformung, beispielsweise zur Herstellung von Ampullen, Spritzenkörpern, Röhren oder dergleichen.

### HINTERGRUND DER ERFINDUNG

Blasen und/oder Einschlüsse führen zu einer unerwünschten Minderung der Qualität von Glaskörpern der vorgenannten Art und sind somit zu vermeiden. Hierzu sind Verfahren zum Detektieren von Blasen und/oder Einschlüssen erforderlich. Ein wichtiger Parameter solcher Verfahren stellt die erzielbare Auflösung dar, welche die minimal erfassbaren Blasen und/oder Einschlüsse vorgibt.

US 5,406,374 offenbart ein Verfahren und eine Vorrichtung zur Detektion von Blasen und/oder Einschlüssen in einem stangenförmigen Glasfaser-Preform. Prüflicht wird über eine Stirnseite in den Glasfaser-Preform eingekoppelt und das transmittierte Licht ortsaufgelöst mittels einer Matrixkamera detektiert, welche das von der gegenüberliegenden Stirnseite des Glasfaser-Preforms abgestrahlte Licht ortsaufgelöst detektiert. Dieses Verfahren eignet sich nicht als in-line Inspektionsverfahren bei der kontinuierlichen Herstellung von Glaskörpern, da die Stirnseiten zur Lichteinkopplung nicht frei zugänglich sind. Ferner setzt die Einkopplung und Auskopplung an den Stirnseiten spezielle Glaskörpergeometrien voraus, die nicht immer gegeben sind.

Um die Einkopplung von Licht an Stirnseiten eines Glaskörpers zu vermeiden, sind im Stand der Technik Verfahren vorgeschlagen worden, bei denen ein Laserstrahl aktiv mithilfe eines Scanners über den Glaskörper gescannt wird und von einer Oberfläche des Glaskörpers ein ortsaufgelöstes Bild erfasst wird. DE 198 13 216 A1 offenbart ein entsprechendes Verfahren zur Detektierung von Fehlern in einem Flachglas. US 5,459,330 offenbart ein entsprechendes Verfahren zur Inspektion von Fernsehbildschirmen. Ein Laserstrahl wird bei diesem Verfahren zu einem "Lichtvorhang" aufgeweitet, der schräg auf die Oberfläche des Glaskörpers einfällt. Licht wird in unterschiedlichem Maße von der Vorder- und Rückseite sowie von Einschlüssen im Volumen des Glaskörpers reflektiert bzw. abgebildet, was durch ortsaufgelöste Detektion bestimmt werden kann, um die Tiefe einer Blase bzw. eines Einschlusses durch Bildanalyse zu bestimmen.

US 6,822,735 B2 offenbart eine Vorrichtung zur Detektion von Blasen in einem Glasrohr. Ein Laserstrahl wird seitlich durch eine Außenumfangsoberfläche des Glasrohrs in die Wandung des Glasrohrs eingekoppelt und ein Bild von der Außenumfangsoberfläche des Glasrohrs in einer Dunkelfeld-Anordnung detektiert. Das Glasrohr muss während der Messung gedreht und in seiner Längsrichtung verfahren werden, was aufwendig ist.

Den vorgenannten Verfahren mit aktiver Scannerbeleuchtung ist gemeinsam, dass diese sehr stark abhängig von der Geometrie des Glaskörpers sind, weil der Glaskörper ein aktives optisches Element im Strahlengang darstellt. Weiterhin sind nur relativ geringe Abtastfrequenzen bedingt durch die mechanische Trägheit der Scannerspiegel realisierbar. Typische Abtastfrequenzen liegen im Bereich von etwa 100 Hz. Die minimal erfassbare Blasenbreite liegt bedingt durch die Strahlgeometrie der Lichtquelle und dem optischen System "Glaskörper" typischerweise bestenfalls bei etwa 15 µm.

DE 102 21 945 C1 offenbart ein Verfahren und eine Vorrichtung zur Ermittlung von Fehlstellen in einem kontinuierlich fortbewegten Band aus transparentem Material. Licht wird in einem Bereich über eine zwischen Lichtquelle und Band angeordnete, transparente Flüssigkeit in das Band eingekoppelt. Das Licht wird durch wiederholte Totalreflexion weitergeleitet.

DE-OS 1 950 847 offenbart eine Vorrichtung zur Anzeige von Brüchen oder Sprüngen in Glastafeln, bei dem Lichtbündel an einem Endbereich in die Tafel eingekoppelt und durch Totalreflexion weitergeleitet werden.

DE 25 27 403 A1 offenbart ein Verfahren und eine Vorrichtung zur Prüfung von durchscheinenden Kunststoffrohren, wobei Abtastlicht in Längsrichtung eines Glasrohrs periodisch über dessen Außenfläche geführt wird.

EP 0 071 202 A1 offenbart eine weitere Anordnung zur optischen Prüfung eines sich bewegenden Glasbands, wobei Licht über die Oberfläche gescannt wird, ein Teil des Lichts in das Glasband eingekoppelt wird und sich dort durch Totalreflektion zu den Stirnseiten hin ausbreitet, um dort detektiert zu werden.

US-A-5 355 213 offenbart ein Verfahren zum Detektieren von Fehlstellen auf der Oberfläche oder im Volumen eines transparenten Körpers, bei dem ein Lichtstrahl in den transparenten Körper eingekoppelt wird, dieser sich in dem transparenten Körper durch Totalreflexion an dessen Oberflächen ausbreitet und die Fehlstellen zu einer Lichtstreuung führt, die auf der Oberfläche des Körpers von einem CCD-Bilddetektor erfasst wird. Dabei wird der Lichtstrahl jedoch über die Stirnseiten des transparenten Körpers eingekoppelt, was eine geeignet bearbeitete Kante des transparenten Körpers voraussetzt.

US 2003/218145 A1 offenbart ein entsprechendes Verfahren, bei dem der Laserstrahl auch über das Substrat gescannt wird. Offenbart wird auch das Aussortieren von Substratbereichen, die aufgrund des Messverfahrens für fehlerhaft befunden wurden.

JP 08 251953 A und Patent Abstracts hierzu offenbaren ein entsprechendes Messverfahren.

### ZUSAMMENFASSUNG DER ERFINDUNG

Aufgabe der vorliegenden Erfindung ist es, ein einfacheres Verfahren und eine entsprechende Vorrichtung zur optischen Inspektion von sich in deren Längsrichtung bewegenden länglichen Glaskörpern bereitzustellen, das insbesondere in einer laufenden Produktion eingesetzt werden kann. Gemäß einem weiteren Gesichtspunkt der vorliegenden Erfindung soll ferner ein Verfahren und eine Vorrichtung unter Verwendung eines solchen Verfahrens bzw. einer solchen Vorrichtung mit einer vorbestimmten maximalen Dichte an Blasen und/oder Einschlüssen bereitgestellt werden.

Diese Aufgaben werden gelöst durch ein Verfahren nach Anspruch 1 bzw. 8 sowie durch eine Vorrichtung nach Anspruch 9 bzw. 15. Weitere vorteilhafte Ausführungsformen sind Gegenstand der Unteransprüche.

Erfindungsgemäß wird Licht auf einer von Stimseiten des Glaskörpers verschiedenen Wandung des Glaskörpers so in den Glaskörper über eine Wandung desselben eingekoppelt, dass sich das Licht durch Lichtleitung, also durch Vielfachreflexion an der Wandung und einer zu dieser beabstandeten zweiten Wandung des Glaskörpers, in einer vorgegebenen Richtung ausbreitet, und zwar von dem Einkopplungsbereich zu einem Beobachtungsvolumen, in welchem ein Bilderfassungsmittel, insbesondere eine CCD-Kamera, vorgesehen ist, um ein Bild von einer Oberfläche des Glaskörpers in dem Beobachtungsvolumen zu erfassen, das anschließend zur Detektion der Blasen und/oder Einschlüsse ausgewertet wird, insbesondere mittels einer Bildauswertungseinrichtung. Dabei werden die Blasen und/oder Einschlüsse erfindungsgemäß in einer Dunkelfeldanordnung detektiert, in der sich die Blasen und/oder Einschlüsse als helle Lichtflecke vor dunklem Bildhintergrund deutlich abheben und somit einfach detektiert werden können.

Erfindungsgemäß braucht das Licht somit nicht mehr über die Oberfläche des Glaskörpers gescannt werden. Vielmehr kann das Licht kontinuierlich oder getaktet eingestrahlt werden. Dies ermöglicht hohe Abtastfrequenzen, die im Wesentlichen nur begrenzt sind durch die Art des verwendeten Bilderfassungsmittels bzw. die Verarbeitungsgeschwindigkeit einer nachgeschalteten Bildauswertungseinrichtung. Das erfindungsgemäße Verfahren ist auch absolut verschleißfrei, da keine mechanisch beweglichen Elemente, beispielsweise Spiegel, erforderlich sind. Erfindungsgemäß lässt sich durch die höhere Abtastrate, die im kHz-Bereich liegen kann, ferner eine wesentlich höhere Messdichte als bei herkömmlichen Messverfahren realisieren. Die höhere Abtastrate ist ferner Grundvoraussetzung für eine genaue Längenbestimmung der Blasen und/oder Einschlüsse und somit für ein noch genaueres Sortierkriterium zum Aussortieren von Glaskörpern mit inakzeptabel hoher Dichte an Blasen und/oder Einschlüssen.

Das erfindungsgemäße Verfahren ist auch unabhängig von der speziellen Art und Geometrie des Glaskörpers, da sich eine Einkopplung von Licht in den Glaskörper durch eine von Stimseiten des Glaskörpers verschiedene Oberfläche des Glaskörpers einfach realisieren lässt, insbesondere auch bei kontinuierlich an dem Beobachtungsvolumen vorbei bewegten Glaskörpern, wie dies bei kontinuierlichen Herstellungsverfahren der Fall ist, oder bei Glaskörpern mit vergleichsweise geringen Außenabmessungen, insbesondere bei Glasrohren mit vergleichsweise geringem Außendurchmesser, wie diese beispielsweise zur Herstellung von Primärpackmitteln für pharmazeutische Anwendungen verwendet werden. Eine Einkopplung des Lichts in vergleichsweise schmale Stirnseiten des Glaskörpers ist erfindungsgemäß nicht erforderlich. Erfindungsgemäß ist es ausreichend, den in den Glaskörper einzukoppelnden Lichtstrahl ausreichend aufzuweiten, sodass ein ausreichend großes Beobachtungsvolumen zur Verfügung steht, und in dem Beobachtungsvolumen ein zur Erfassung eines Bildes in dem gesamten Beobachtungsvolumen ausgelegtes Bilderfassungsmittel vorzusehen.

Das erfindungemäße Verfahren lässt sich grundsätzlich auf beliebig geformte Glaskörper anwenden, beispielhaft seien genannt: Flachglas, Glasstangen oder Glasrohre, jeweils mit kreisförmigem oder auch nicht-kreisförmigem Querschnitt. Da sich das erfindungsgemäße Verfahren als in-line Messverfahren eignet, kann der Glaskörper kontinuierlich oder getaktet an dem Beobachtungsvolumen vorbei geführt werden. Grundsätzlich kann jedoch auch das Beobachtungsvolumen einschließlich der Bilderfassungsmittel und der zugeordneten Lichteinkopplungsmittel zum Einkoppeln von Licht in den Glaskörper zum Abtasten des Glaskörpers relativ zu diesem verfahren werden.

Da durch Reflexionsverlust ein signifikanter Lichtanteil zur Messung nicht zur Verfügung steht, ist erfindungsgemäß auf einen geringen Abstand zwischen dem jeweiligen Einkopplungsbereich und dem Beobachtungsvolumen zu achten. Je nach Geometrie des Glaskörpers und des gewählten Strahlengangs in dem Glaskörper kann dieser Abstand von der Größenordnung von einem oder wenigen Millimetern betragen. Um eine direkte Reflexion des Lichts von der Oberfläche bzw. dem Lichteinkopplungsbereich auf das jeweilige Bilderfassungsmittel noch zuverlässiger zu verhindern, ist das Beobachtungsvolumen erfindungsgemäß von dem jeweiligen Lichteinkopplungsbereich mittels einer Blende getrennt, die eine Öffnung aufweist, die gerade so bemessen ist, dass die Blende nicht den Glaskörper berührt, und durch die hindurch sich der Glaskörper erstreckt bzw. kontinuierlich an dem Beobachtungsvolumen vorbei geführt wird.

Aufgrund des Lichtleiteffekts nimmt die Intensität des Lichts in dem Glaskörper in der vorgegebenen Richtung stark ab. Um für gleichmäßige Beleuchtungsverhältnisse zu sorgen, ist es gemäß einer weiteren Ausführungsform von Vorteil, zumindest zwei Lichteinkopplungsbereiche vorzusehen, die symmetrisch im Bezug zu dem Beobachtungsvolumen angeordnet sind.

Erfindungsgemäß wird das Licht in einer Richtung quer zur vorgegebenen Richtung der Lichtausbreitung gleichmäßig eingekoppelt. Im Falle eines flachen Glaskörpers kann es zu diesem Zweck ausreichend sein, das einzukoppelnde Licht quer zur vorgegebenen Richtung der Lichtleitung aufzuweiten bzw. aufgeweitet abzustrahlen, beispielsweise mittels einer Zylinderlinse, eines Zylinderlinsen-Arrays, eines Arrays von Lichtleitern bzw. Lichtleiterbündeln. Bei einem stangen- oder rohrförmigen Glaskörper kann es von Vorteil sein, eine Mehrzahl von Lichtquellen und zugeordneten Lichteinkopplungsbereichen verteilt um den Außenumfang des Glaskörpers herum und in einem vorbestimmten Abstand zu dem Beobachtungsvolumen anzuordnen, was sich ebenfalls ohne weiteres mittels der vorgenannten Abbildungsoptiken realisieren lässt.

Damit die gesamte Oberfläche des Glaskörpers in dem Beobachtungsvolumen erfasst werden kann, kann es von Vorteil sein, Bilderfassungsmittel zu verwenden bzw. geeignet anzuordnen, sodass der Bilderfassungsbereich in einer Richtung quer zur vorgegebenen Richtung der Lichtleitung verlängert ist. Dies lässt sich im Falle eines Flachglases beispielsweise mittels eines streifenförmigen Bilderfassungsmittels realisieren, das sich in der Richtung quer zur vorgegebenen Richtung parallel zur Oberfläche des Glaskörpers erstreckt. Im Falle eines stangen- oder rohrförmigen Glaskörpers kann vorgesehen sein, eine Mehrzahl von Bilderfassungsmitteln quer zur vorgegebenen Richtung verteilt um den Außenumfang des Glaskörpers herum anzuordnen.

Zur Lichtleitung kann es erfindungsgemäß ausreichend sein, das Licht unter einem Winkel in den Glaskörper einzukoppeln, sodass das Licht in dem Glaskörper durch Reflexion unter einem Winkel, der kleiner ist als der Grenzwinkel für Totalreflexion an der Grenzfläche Glas/Luft, in der vorgegebenen Richtung weitergeleitet wird. Bei jeder Reflexion an einer Grenzfläche Glas/Luft geht jedoch ein vergleichsweise hoher Lichtanteil verloren. Allerdings lässt sich eine solche Lichteinkopplung vorteilhaft einfach durch Einstrahlen eines Lichtstrahls auf die Oberfläche des Glaskörpers realisieren. Vorteilhaft ist, dass eine solche Lichteinkopplung berührungsfrei erfolgen kann, dass die Oberfläche des Glaskörpers also nicht beschädigt oder verunreinigt wird, beispielsweise durch eine Immersionsflüssigkeit. Die Vermeidung solcher Verunreinigungen kann für hoch reine Anwendungen zwingend erforderlich sein, insbesondere zur Herstellung von Glasrohren als Ausgangsmaterial zur Herstellung von Primärpackmitteln für pharmazeutische Anwendungen.

Um Lichtleitverluste durch Vielfachreflexion an der Grenzfläche Glas/Luft möglichst gering zu halten, kann gemäß einer weiteren Ausführungsform das Licht unter einem Winkel in den Glaskörper eingekoppelt werden, sodass das Licht in dem Glaskörper durch Reflexion unter einem Winkel, der nur geringfügig kleiner, beispielsweise um etwa 0,5° bis etwa 1° kleiner, als der Grenzwinkel für Totalreflexion an der Grenzfläche Glas/Luft ist, in der vorgegebenen Richtung weitergeleitet wird. Bei einer solchen Ausführungsform kann das Beobachtungsvolumen auch unter einem schrägen Beobachtungswinkel zur Oberfläche des Glaskörpers beobachtet bzw. erfasst werden.

Zur weiteren Minderung von Verlusten bei der Lichtleitung in dem Glaskörper kann gemäß einer weiteren Ausführungsform vorgesehen sein, das Licht so in den Glaskörper einzukoppeln, dass sich das eingekoppelte Licht durch Totalreflexion an den Grenzflächen Glas/Luft in dem Glaskörper bzw. einer Wandung des Glaskörpers ausbreitet. Eine solche Einkopplung lässt sich beispielsweise durch Einkoppeln von Licht mittels einer Immersionsflüssigkeit oder durch Annähern eines Einkopplungs-Glasprismas an den Glaskörper bis auf Abstände von unterhalb von etwa 1 µm realisieren, was jedoch aufwendig ist und ggf. zur Beschädigung des Glaskörpers führen kann.

Für eine noch homogenere Ausleuchtung des Glaskörpers kann gemäß einer weiteren Ausführungsform vorgesehen sein, dass der in den Glaskörper einzukoppelnde Lichtstrahl divergent aufgeweitet ist zu einem Strahlenbündel mit unterschiedlichen Eintrittswinkeln.

Zur Erhöhung der Lichtausbeute der Detektion kann von Vorteil sein, wenn als Bilderfassungsmittel eine Matrix von lichtempfindlichen Elementen eingesetzt wird, die in einer Richtung quer zur vorgegebenen Richtung der Lichtleitung vergleichsweise schmal sind (zur Erzielung einer hohen Ortsauflösung), die jedoch in der vorgegebenen Richtung vergleichsweise lang sind, um in der vorgegebenen Richtung abgestrahltes Licht aufintegrieren zu können, was insbesondere dann von Vorteil ist, wenn der Glaskörper in der vorgegebenen Richtung an dem Beobachtungsvolumen vorbei bewegt wird.

Gemäß einer weiteren Ausführungsform kann das in den Glaskörper eingekoppelte Licht gepulst bzw. getaktet sein, was sich ohne weiteres mittels gepulster Laser, mittels Licht-Shutter oder geeigneter Blitzlichtquellen realisieren lässt. Alternativ oder ergänzend kann selbstverständlich auch die Bilderfassung getaktet erfolgen. In Kenntnis der Geschwindigkeit, mit welcher der Glaskörper in der vorgegebenen Richtung an dem Beobachtungsvolumen vorbei bewegt wird, sowie in Kenntnis der Taktrate des Beleutungslichts bzw. der Detektion kann aus der detektierten Länge der Blasen und/oder Einschlüsse sowie der Verschiebung der Blasen und/oder Einschlüsse zwischen aufeinander folgenden Bildern bzw. Beleuchtungs-Blitzen präzise auf die Länge der Blasen und/oder Einschlüsse geschlossen werden.

Damit eine unerwünschte Randstreuung an dem Glaskörper, die in dem erfassten Bild zu vergleichsweise hellen Bildflecken führt, nicht versehentlich als Blasen und/oder Einschlüsse detektiert wird, kann gemäß einer weiteren Ausführungsform vorgesehen sein, in vorgegebenen Zeitintervallen, während denen kein Bild zur Bestimmung der Blasen und/oder Einschlüsse erfasst wird (was sich beispielsweise mittels eines gepulsten Einkopplungslichts realisieren lässt), ein Schattenbild des Glaskörpers zu erfassen, in dem sich die Ränder des Glaskörpers abzeichnen, insbesondere durch Lichtstreuung am Rand des Glaskörpers. Gemäß dieser Ausführungsform kann vorgesehen sein, zur Bildauswertung nur Bildbereiche innerhalb der so bestimmten Ränder zu verwenden, wobei zweckmäßig ein vorbestimmter Abstand zu diesen Rändern eingehalten wird, der sich beispielsweise durch eine fest vorgegebene Anzahl oder durch eine fest vorgegebene Anzahl von Pixel oder durch einfach zu ermittelnde Verhältniszahl realisieren lässt.

Gemäß einem weiteren Gesichtspunkt der vorliegenden Erfindung wird das vorgenannte Verfahren zur Ableitung eines Sortierkriteriums herangezogen. Bei diesem Verfahren werden somit Glaskörper mit einer inakzeptabel hohen Dichte an Blasen und/oder Einschlüssen in einer Sortiereinrichtung aussortiert, sodass sich erfindungsgemäß ein Glaskörper mit einer vorgebbaren maximalen Dichte an Blasen und/oder Einschlüssen realisieren lässt.

Gemäß einem weiteren Gesichtspunkt der vorliegenden Erfindung kann dieses Verfahren insbesondere bei der kontinuierlichen Herstellung von länglichen Glaskörpern, beispielsweise Flachglas oder stangen- oder rohrförmigen Glaskörpern, eingesetzt werden. Zu diesem Zweck wird das vorgenannte Verfahren als in-line Messung an einem kontinuierlich in der vorgegebenen Richtung an dem Beobachtungsvolumen vorbei geführten länglichen Glaskörper angewendet, um die Dichte der Blasen und/oder Einschlüsse zu ermitteln, wobei der Glasstrang in einer nachgeordneten Trenn- und Sortiereinrichtung in Glaskörper mit der gewünschten maximalen Dichte an Blasen und/oder getrennt und sortiert wird.

Gemäß einem weiteren Gesichtspunkt der vorliegenden Erfindung kann das vorgenannte Detektionsverfahren insbesondere auch zur Beeinflussung, insbesondere zur Steuerung oder Regelung, von Prozessparametern bei der Herstellung von länglichen Glaskörpern, beispielsweise Flachglas oder stangen- oder rohrförmigen Glaskörpern, eingesetzt werden, welche die Dichte der Blasen und/oder Einschlüsse beeinflussen. Diese Prozessparameter können insbesondere Schmelzparameter sein, welche die Glasschmelze betreffen. Auf der Grundlage der nach dem erfindungsgemäßen Verfahren detektierten Dichte an Blasen und/oder Einschlüssen kann dann ein Prozessparameter geeignet beeinflusst werden, um eine gewünschte, insbesondere minimale, Dichte an Blasen und/oder Einschlüssen einzustellen. Der Prozessparameter kann dabei manuell oder automatisiert gesteuert oder geregelt verändert werden.

Somit lässt sich mittels des vorgenannten Verfahrens ein Glasrohr mit einer vorgegebenen maximalen Dichte an Blasen und/oder Einschlüssen herstellen, das als Halbfabrikat bzw. Ausgangsmaterial zur Herstellung von Primärpackmitteln für pharmazeutische Anwendungen durch weitere Umformung verwendbar ist. Ein solches Glasrohr zeichnet sich insbesondere durch einen vergleichsweise geringen Außendurchmesser aus, der bevorzugt kleiner als etwa 10 mm ist und bevorzugter im Bereich zwischen etwa 1,5 mm und etwa 10 mm liegt. Ein solches Glasrohr zeichnet sich insbesondere auch durch eine vergleichsweise hohe Wanddicke aus, die bevorzugt im Bereich zwischen etwa 2,0 mm und etwa 4,0 mm liegt.

Derartige Glasrohre mit einer vorgegebenen maximalen Dichte an Blasen und/oder Einschlüssen können insbesondere für Backlight-Anwendungen bei der Hinterleuchtung von LCD-Bildschirmen oder dergleichen verwendet werden. Derartige Glasrohre zeichnen sich insbesondere durch einen vergleichsweise geringen Außendurchmesser aus, der bevorzugt kleiner als etwa 10 mm ist, bevorzugter im Bereich zwischen etwa 2 mm und etwa 8 mm liegt und noch bevorzugter im Bereich zwischen etwa 2 mm und 6 mm bzw. im Falle von sog. Karpoulen für den vorgenannten Zweck im Bereich zwischen etwa 6 mm und 8 mm liegt.

### FIGURENÜBERSICHT

Nachfolgend wird die Erfindung in beispielhafter Weise und unter Bezugnahme auf die beigefügten Zeichnungen beschrieben werden, woraus sich weitere Merkmale, Vorteile und zu lösende Aufgaben ergeben werden und worin:
- Fig.: 1 in einer schematischen Schnittansicht ein Verfahren gemäß einer ersten Ausführungsform der vorliegenden Erfindung darstellt;
- Fig. 2: in einer schematischen Schnittansicht ein Verfahren gemäß einer zweiten Ausführungsform der vorliegenden Erfindung darstellt; und
- Fig. 3: eine schematische Draufsicht auf eine als Bilderfassungsmittel verwendete Matrix von lichtempfindlichen Elementen gemäß der vorliegenden Erfindung ist.

In den Figuren bezeichnen identische Bezugszeichen identische oder im Wesentlichen gleich wirkende Elemente oder Elementgruppen.

### AUSFÜHRLICHE BESCHREIBUNG VON AUSFÜHRUNGSBEISPIELEN

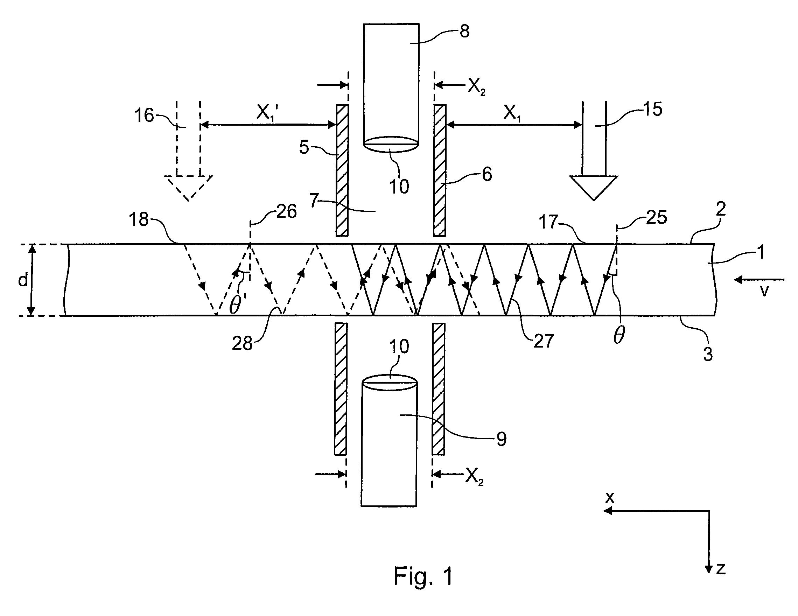

Die Fig. 1 stellt in einem Teilschnitt einen in x-Richtung längs erstreckten Glaskörper 1 dar, der eine Oberseite 2 und eine Unterseite 3 aufweist und beispielsweise als Vollglasstange oder Flachglas ausgebildet sein kann, mit einer vorgegebenen Querabmessung in einer Richtung senkrecht zur Bildebene. Gemäß der Fig. 1 legen zwei zueinander beabstandete Blenden 5,6 mit einer Öffnung, durch die sich der Glaskörper 1 hindurch erstreckt, ein Beobachtungsvolumen 7 fest, mit einer Länge in der x-Richtung X2. In dem Beobachtungsvolumen 7 sind zwei als Bilderfassungsmittel wirkende CCD-Kameras 8, 9 vorgesehen, die ein Bild von der Oberseite bzw. Unterseite 2, 3 des Glaskörpers 1 ortsaufgelöst erfassen. Den Kameras 8, 9 sind geeignete Objektive 10 zugeordnet, die eine ausreichende Ortsauflösung und Tiefenschärfe ermöglichen.

Gemäß der Fig. 1 sind symmetrisch zu dem Beobachtungsvolumen 7 und unter Abständen X1 bzw. X1' zwei Lichteinkopplungsbereiche 15, 16 vorgesehen, um Lichtstrahlen 27 bzw. 28 in den Glaskörper 1 einzukoppeln. Die Einkopplung in den Glaskörper 1 erfolgt dabei so, dass sich der jeweils eingekoppelte Lichtstrahl 27, 28 in der x-Richtung bzw. entgegengesetzt durch Vielfachreflexion an der Oberseite 2 und der Unterseite 3 ausbreitet. Der jeweilige Reflexionswinkel ist in der Fig. 1 mit θ bzw. θ' bezeichnet, wobei mit dem Bezugszeichen 25 bzw. 26 die Senkrechte auf die Oberfläche 2 bezeichnet sei. Der Reflexionswinkel kann kleiner sein als der Grenzwinkel der Totalreflexion an der Grenzfläche Glas/Luft, in welchem Fall bei jeder Reflexion an einer Grenzfläche erhebliche Lichtverluste eintreten. Deshalb ist der Abstand X1 bzw. X1' zu dem Beobachtungsvolumen 7 zu minimieren. Gemäß der Fig. 1 ist dieser Abstand von der Größenordnung der Dicke des Glaskörpers 1 in der z-Richtung und kann beispielsweise bis hinab zu etwa 1 mm betragen. Aufgrund der symmetrischen Anordnung der Lichteinkopplungsbereiche 17 bzw. 18 kommt es zu einer gleichmäßigen Ausleuchtung des Glaskörpers 1 in dem Beobachtungsvolumen 7. Das in dem Glaskörper 1 geleitete Licht wird von Blasen und/oder Einschlüssen im Bereich des Beobachtungsvolumens 7 fokussiert bzw. konzentriert, was sich in dem erfassten Bild in einem hellen Lichtfleck bemerkbar macht. Wenngleich in der Fig. 1 nicht dargestellt, sind den CCD-Kameras 8,9 entsprechende Bildauswertungseinrichtungen, beispielsweise eine CPU, zugeordnet, um die erfassten Bilder weiter auszuwerten. Zur Bestimmung der Blasen und/oder Einschlüsse kann grundsätzlich eine einfache Auswertung der Lichtintensität ausreichend sein, was insbesondere mittels eines geeigneten Schwellenwerts erzielt werden kann. Selbstverständlich kann auch eine aufwendigere Bildauswertung erfolgen, insbesondere auch Kantendetektion oder dergleichen.

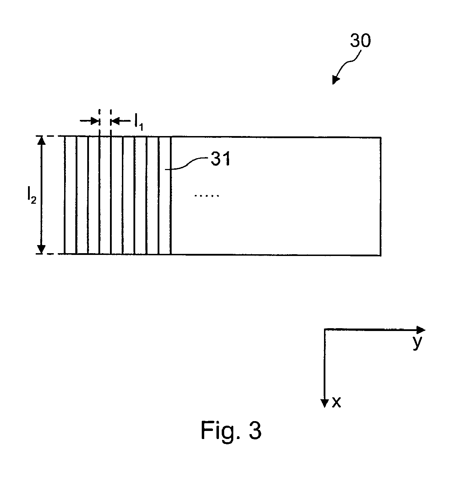

Die Fig. 3 zeigt in einer schematischen Draufsicht einen CCD-Chip 30 der verwendeten CCD-Kameras. Gemäß der Fig. 3 sind die einzelnen Pixeln entsprechenden lichtempfindlichen Elemente 31 in der vorgegebenen Richtung (x) vergleichsweise lang und in der Richtung quer dazu (y) vergleichsweise schmal. Dies ermöglicht in der Richtung quer zur Richtung der Lichtleitung, das heißt in y-Richtung, eine hohe Ortsauflösung, während sämtliches in einen Lichtkegel in die vorgegebene Richtung, das heißt die x-Richtung, reflektierte bzw. abgebildete Licht durch die jeweiligen lichtempfindlichen Elemente 31 aufintegriert wird. Dies ermöglicht eine hohe Lichtempfindlichkeit des eingesetzten Verfahrens. Selbstverständlich ist die vorliegende Erfindung jedoch nicht auf die Verwendung von rechteckförmigen lichtempfindlichen Elementen beschränkt sondern können auch quadratische lichtempfindliche Elemente verwendet werden.

Somit erstrecken sich gemäß der Fig. 1 die CCD-Kameras 8, 9 senkrecht zur Bildebene über eine vorgegebene Länge, die bevorzugt der Außenabmessung des Glaskörpers 1 entspricht, sodass in dem Beobachtungsvolumen 7 ein Bild über die gesamte Breite des Glaskörpers 1 erfasst werden kann. Für den Fall eines stangen- oder rohrförmigen Glaskörpers wird bevorzugt, wenn eine Mehrzahl von CCD-Kameras verteilt um den Außenumfang des Glaskörpers herum angeordnet sind und wenn die zugeordneten Lichteinkopplungsbereiche ebenfalls verteilt um den Außenumfang des Glaskörpers herum angeordnet sind. Dabei kann insbesondere auch vorgesehen sein, dass die jeweiligen Bilderfassungsbereiche der verteilt angeordneten Bilderfassungsmittel entlang dem Umfang des Glaskörpers miteinander überlappen.

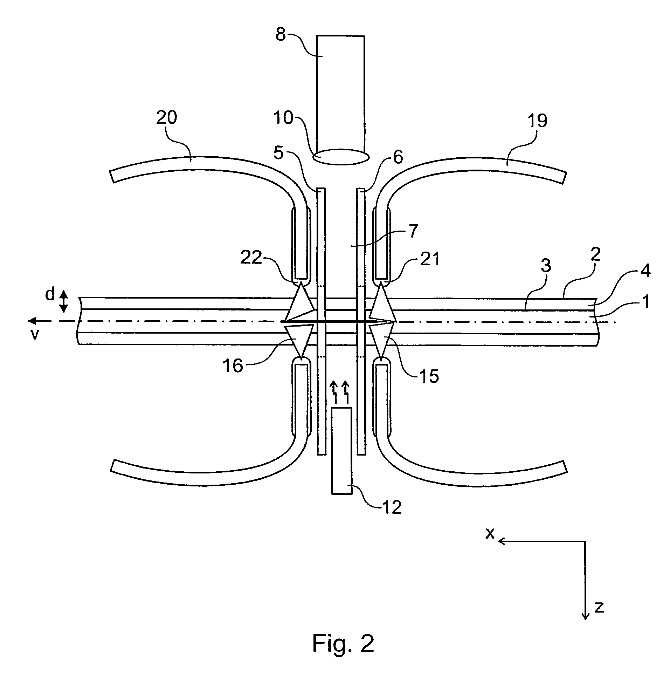

Die Fig. 2 zeigt eine Messanordnung gemäß einer zweiten Ausführungsform der vorliegenden Erfindung, mit der Blasen und/oder Einschlüsse in der Wand 4 eines Glasrohrs 1 detektiert werden sollen, das mit einer Geschwindigkeit v, wie durch den Pfeil angedeutet, an dem Beobachtungsvolumen 7 vorbei bewegt wird. Gemäß der Fig. 2 wird das Licht über Lichtleiter 19, 20 an das Beobachtungsvolumen 7 herangeführt. An den jeweiligen Lichtleiterenden sind entsprechende Einkopplungsoptiken 21, 22 vorgesehen, die die Einkopplungs-Lichtstrahlen 15, 16 in der x-Richtung divergent aufweiten und in der Richtung quer dazu zu einem länglichen Strahlvolumen aufweiten, was sich beispielsweise mittels einer geeigneten Zylinderlinse und der Verwendung entsprechender Lichtleiterbündel realisieren lässt.

Gemäß der Fig. 2 ist eine weitere Lichtquelle 12 diametral gegenüberliegend zu der CCD-Kamera 8 angeordnet. Mit dieser Lichtquelle 12 wird in Zeitintervallen, während denen kein Licht in die Wand 4 des Glaskörpers 1 eingekoppelt wird, ein Schatten des Glasrohrs 1 auf die CCD-Kamera 8 projiziert, der ortsaufgelöst erfasst und ausgewertet wird. In der Schattenprojektion zeichnen sich die Außen- und Innenränder des Glasrohrs 1 ab, sodass in dem erfassten Bild Bildbereiche ermittelt werden können, die dem Bereich einer Rohrwandung 4 entsprechen. Gemäß dieser Ausführungsform werden zur Bestimmung der Blasen und/oder Einschlüsse in der Wandung 4 nur die so ermittelten Bildbereiche verwendet, nicht aber Bildbereiche, die dem Rohrinnenraum bzw. Rohraußenraum entsprechen. Zweckmäßig wird ein vorgegebener Mindestabstand zu den so ermittelten Rändern des jeweiligen Bildbereichs eingehalten.

Zur Anpassung an Glasrohre mit unterschiedlichen Außenabmessungen kann vorgesehen sein, dass die Lichteinkopplungsoptiken und CCD-Kameras zu einer verstellbaren Einheit zusammengefasst sind, sodass der Abstand zur Oberfläche des Glaskörpers koordiniert verstellt werden kann und somit gleichmäßige Beleuchtungsverhältnisse für Glaskörper mit unterschiedlichen Außenabmessungen realisiert werden können.

Wie dem Fachmann beim Studium der vorstehenden Beschreibung ohne weiteres ersichtlich sein wird, eignet sich das erfindungsgemäße Verfahren zur berührungsfreien Inspektion beliebig geformter Glaskörper, insbesondere von längs erstreckten Stangen- oder Hohlprofilen, die bei einem kontinuierlichen Herstellungsverfahren kontinuierlich in der vorgegebenen Richtung der Lichtleitung an dem Beobachtungsvolumen vorbei geführt werden. Bevorzugte Verwendungsformen solcher Glasrohre sind insbesondere: Halbfabrikat zur Herstellung von Primärpackmitteln für pharmazeutische Anwendungen, insbesondere durch Umformung derselben; Herstellung von Backlightröhren mit vergleichsweise geringem Rohrquerschnitt bei großer Wanddicke für LCD-Displays.

### Ausführungsbeispiel

Ein Glasrohr mit einem Außendurchmesser von 8 mm und einer Wanddicke von 3,5 mm wird kontinuierlich gezogen und mit einer Geschwindigkeit von 3 m/s an einem Array von CCD-Kameras vorbei bewegt, die unter Winkelabständen von 120 Grad um den Außenumfang des Glasrohres herum gleichmäßig verteilt angeordnet sind. Die Länge der lichtempfindlichen Elemente der CCD-Matrix in Rohrzugrichtung betrug 0,2 mm, die Breite in einer Richtung quer dazu 20 µm. Bilder von der Oberfläche des Glasrohrs wurden mit einer Wiederholfrequenz von 1,5 kHz erfasst, was eine Genauigkeit der Längenbestimmung von Blasen und/oder Einschlüssen in der Rohrwand von der Größenordnung von wenigen mm ermöglicht. Bei einem Ausführungsbeispiel betrug die Genauigkeit der Breitenbestimmung der Blasen und/oder Einschlüsse etwa 8 µm. In der Wand des Glasrohrs war farbig ein Kennstreifen eingelassen, zur Charakterisierung der Glassorte und von weiteren Spezifikationen des Glasrohrs. Die Messergebnisse, insbesondere die erzielte Ortsauflösung, wurden durch den Kennstreifen nicht beeinflusst.

### Bezugszeichenliste

- 1: Glaskörpers / Glasrohr
- 2: Oberseite Außenoberfläche
- 3: Unterseite / Innenoberfläche
- 4: Rohrwand
- 5: Blende
- 6: Blende
- 7: Bcobachtungsvolumen
- 8: Kamera
- 9: Kamera
- 10: Objektiv
- 12: Lichtquelle für Randdetektion
- 15: Beleuchtungs-Lichtstrahl
- 16: Beleuchtungs-Liehtstrahl
- 17: Einkopplungsbereich
- 18: Einkopplungsbereich
- 19: Lichtleiter
- 20: Lichtleiter
- 21: Einkopplungsoptik
- 22: Einkopplungsoptik
- 25: Senkrechte
- 26: Senkrechte
- 27: Lichtstrahl
- 28: Lichtstrahl
- 30: Fotodetektorarray
- 31: Lichtempfindliches Element

## Patentansprüche

1. Verfahren zum Detektieren von Blasen und/oder Einschlüssen in einem Glaskörper (1), insbesondere in einer Wand (4) eines Glasrohrs, der eine erste Oberfläche (2) und eine zu dieser beabstandete zweite Oberfläche (3) aufweist, die verschieden zu Stirnseiten des Glaskörpers (1) sind, bei welchem Verfahren:
ein Beleuchtungs-Lichtstrahl (15, 16) in einem Einkopplungsbereich (17, 18) auf der ersten oder zweiten Oberfläche (2, 3) so in den Glaskörper (1) eingekoppelt wird, dass sich Licht (27, 28) durch Vielfachreflexion an der ersten und zweiten Oberfläche (2, 3) in einer vorgegebenen Richtung (x) in dem Glaskörper ausbreitet, wobei der Beleuchtungs-Lichtstrahl in dem Einkopplungsbereich (17, 18) in einer Richtung quer zur vorgegebenen Richtung (x) eingekoppelt wird, und
in einem Beobachtungsvolumen (7), das zu dem Einkopplungsbereich in der vorgegebenen Richtung (x) beabstandet ist, ein Bild von der ersten oder zweiten Oberfläche (2, 3) des Glaskörpers erfasst wird, das zur Detektion der Blasen und/oder Einschlüsse ausgewertet wird, wobei
der Glaskörper (1) in der vorgegebenen Richtung (x) an dem Bcobachtungsvolumen (7) vorbei bewegt wird und
zumindest eine Blende (21, 22) mit einer Öffnung, durch die hindurch sich der Glaskörper (1) erstreckt und der Glaskörper (1) an dem Beobachtungsvolumen (7) vorbei bewegt wird, das Beobachtungsvolumen (7) von dem Einkopplungsbereich (17, 18) so trennt, dass das Bild in einer Dunkelfeldanordnung detektiert wird.

2. Verfahren nach Ansprüch 1, wobei das Licht in zumindest zwei Einkopplungsbereichen (17, 18) in den Glaskörper (1) eingekoppelt wird, die unter gleichen Abständen (X1, X1') in der vorgegebenen Richtung beabstandet und symmetrisch zu dem Beobachtungsvolumen vorgesehen sind.

3. Verfahren nach einem der vorhergehenden Ansprüche, wobei der Glaskörper (1) Stangen- oder rohrförmig ausgebildet und in der vorgegebenen Richtung (x) längs erstreckt ist, wobei das Bild mittels einer Mehrzahl von Bilderfässungsmitteln (8, 9) erfasst wird, die um die eine Außenumfangsoberfläche des Glaskörpers ausbildende erste oder zweite Oberfläche herum verteilt angeordnet sind.

4. Verfahren nach einem der vorhergehenden Ansprüche, wobei das Bild mittels einer Matrix (30) von lichtempfindlichen Elementen (31) erfasst wird, um die Blasen und/oder Einschlüsse in dem Glaskörper (1) ortsaufgelöst zu detektierten, wobei die Matrix (30) eine eindimensionale Matrix von lichtempfindlichen Elementen (31) ist, die in der vorgegebenen Richtung (x) länger sind als quer dazu.

5. Verfahren nach einem der vorhergehenden Ansprüche, wobei das Licht in dem jeweiligen Einkopplungsbereich (17, 18) so in den Glaskörper (1) eingekoppelt wird, dass das Licht durch Reflexion unter einem Winkel, der kleiner ist als der Grenzwinkel für Totalreflexion an der jeweiligen Oberfläche (2, 3), in dem Glaskörper (1) in der vorgegebenen Richtung (x) weitergeleitet wird.

6. Verfahren nach einem der vorhergehenden Ansprüche, wobei in dem jeweiligen Einkopplungsbereich Licht von einem Lichtleiter (19, 20) oder Lichtleiterbündel abgestrahlt wird, das abgestrahlte Licht aufgeweitet wird und in den Glaskörper (1) eingekoppelt wird.

7. Verfahren nach einem der vorhergehenden Ansprüche, wobei Beleuchtungsmittel (19, 20) zum Beleuchten der ersten und/oder der zweiten Oberfläche (2, 3) des Glaskörpers (1) und Bilderfassungsmittel (8, 9) zum Erfassen des Bildes koordiniert quer zur vorgegebenen Richtung (x) In Anpassung an eine Außenabmessung des Glaskörpersverstellt werden, wobei ein Schatten des Glaskörpers (1) während Zeitintervallen, während denen das Bild nicht erfasst wird, auf eine Matrix von lichtempfindlichen Elementen (31) abgebildet wird, um Ränder des Glaskörpers (1) zu identifizieren, wobei das Bild zur Detektion von Blasen und/oder Einschlüssen so erfasst wird, dass Signalbeiträge der so identifizierten Ränder ausgeblendet sind.

8. Verfahren zur Herstellung von Glaskörpern mit einer vorbestimmten maximalen Dichte an Blasen und/oder Einschlüssen, bei welchem Verfahren
a) ein Glasstrang (1), der eine erste Oberfläche (2) und eine zu dieser beabstandete zweite Oberfläche (3) aufweist, die verschieden zu Stirnseiten des Glasstrangs (1) sind, bereitgestellt und in einer vorgegebenen Richtung (x) an Bilderfassungsmitteln (8, 9) vorbei bewegt wird;
b) die Dichte an Blasen und/oder Einschlüssen durch Ausführen der folgenden Schritte bestimmt wird:
b1) ein Beleuchtungs-Lichtstrahl (15, 16) wird in einem Einkopplungsbereich (17, 18) auf der ersten oder zweiten Oberfläche (2, 3) so in den Glasstrang (1) eingekoppelt, dass sich Licht (27, 28) durch Vielfachreflexion an der ersten und zweiten Oberfläche (2, 3) in der vorgegebenen Richtung (x) in dem Glasstrang ausbreitet, wobei der Beleuchtungs-Lichtstrahl in dem Einkopplungsbereich (17, 18) in einer Richtung quer zur vorgegebenen Richtung (x) eingekoppelt wird;
b2) in einem Beobachtungsvolumen (7), das zu dem Einkopplungsbereich in der vorgegebenen Richtung (x) beabstandet ist, wird ein Bild von der ersten oder zweiten Oberfläche (2,3) des Glasstrangs erfasst; und
b3) das Bild wird zur Detektion der Blasen und/oder Einschlüsse ausgewertet, um die Dichte an Blasen und/oder Einschlüssen zu bestimmen, wobei zumindest eine Blende (21, 22) mit einer Öffnung, durch die hindurch sich der Glaskörper (1) erstreckt und der Glaskörper (1) an dem Beobachtungsvolumen (7) vorbei bewegt wird, das Beobachtungsvolumen (7) von dem Einkopplungsbereich (17, 18) so trennt, dass das Bild in einer Dunkelfeldanordnung detektiert wird;
c) der Glasstrang (1) in der vorgegebenen Richtung (x) in Glaskörper zerlegt wird; und
d) diejenigen Glaskörper, für die in dem Glasstrang eine Dichte an Blasen und/oder Einschlüssen bestimmt wird, die größer ist als die vorbestimmte maximale Dichte, aussortiert werden.

9. Vorrichtung zum Detektieren von Blasen und/oder Einschlüssen in einem Glaskörper (1), insbesondere in einer Wand (4) eines Blasrohres, der eine erste Oberfläche (2) und eine zu dieser beabstandete zweite Oberfläche (3) aufweist, mit:
Lichteinkopplungsmitteln (21, 22), um einen Beleuchtungs-Lichtstrahl (15, 16) in einem Einkopplungsbereich (17, 18) so in den Glaskörper einzukoppeln, dass sich Licht (27, 28) durch Vielfachreflexion an der ersten und zweiten Oberfläche (2, 3) in einer vorgegebenen Richtung (x) in dem Glaskörper ausbreitet, und
zumindest einem Bilderfassungsmittel (8, 9), um in einem Beobachtungsvolumen (7) das zu dem Einkopplungsbereich (17, 18) in der vorgegebenen Richtung (x) beabstandet ist, ein Bild von der ersten oder zweiten Oberfläche (2, 3) des Glaskörpers (1) zu erfassen, das zur Detektion der Blasen und/oder Einschlüsse ausgewertet wird, **dadurch gekennzeichnet, dass**
ein Fördermittel (v) vorgesehen ist, um den Glaskörper (1) in der vorgegebenen Richtung (x) an dem jeweiligen Bilderfassungsmittel (8, 9) vorbei zu bewegen, und
die Lichteinkopplungsmittel (21, 22) ausgelegt sind, um den Beleuchtungs-Lichtstrahl (15, 16) auf der ersten oder zweiten Oberfläche (2, 3) so in den Glaskörper (1) einzukoppeln, dass sich Licht (27, 28) durch Vielfachreflexion an der ersten und zweiten Oberfläche (2, 3) in der vorgegebenen Richtung (x) in dem Glaskörper ausbreitet, wobei der Beleuchtungs-Lichtstrahl in dem Einkopplungsbereich (17, 18) in einer Richtung quer zur vorgegebenen Richtung (x) eingekoppelt wird,
wobei zumindest eine Blende (21, 22) mit einer Öffnung vorgesehen ist, durch die hindurch sich der Glaskörper (1) erstreckt und der Glaskörper (1) an dem Beobachtungsvolumen (7) vorbei bewegt wird, wobei die Blende das Beobachtungsvolumen (7) von dem Einkopplungsbereich (17, 18) so trennt, dass das Bild in einer Dunkelfeldanordnung detektiert wird.

10. Vorrichtung nach Anspruch 9, mit zumindest zwei Lichteinkopplungsmitteln (21, 22), um das Licht in zumindest zwei Einkopplungsbereichen (17, 18) in den Glaskörper (1) einzukoppeln, wobei die Lichteinkopplungsmittel unter jeweils gleichen Abständen (X1, X1') in der vorgegebenen Richtung (x) beabstandet und symmetrisch zu dem Beobachtungsvolumen (7) vorgesehen sind.

11. Vorrichtung nach Anspruch 9 oder 10, wobei eine Mehrzahl von Bilderfassungsmitteln (8, 9) um die eine Außenumfangsoberfläche des Glaskörpers ausbildende erste oder zweite Oberfläche (2, 3) herum verteilt angeordnet sind, um das Bild eines stangen- oder rohrförmig ausgebildeten, in der vorgegebenen Richtung (x) längs erstreckten Glaskörpers (1) zu erfassen.

12. Vorrichtung nach einem der Ansprüche bis 11, wobei das jeweilige Bilderfassungsmittel (8, 9) jeweils eine Matrix (30) von lichtempfindlichen Elementen (31) umfasst, um die Blasen und/oder Einschlüsse in dem Glaskörper (1) ortsaufgelöst zu detektierten, wobei die Matrix (30) eine eindimensionale Matrix von lichtempfindlichen Elementen (31) ist, die in der vorgegebenen Richtung (x) länger sind als quer dazu.

13. Vorrichtung nach einem der Ansprüche 9 bis 12, wobei die Lichteinkopplungsmittel (21, 22) und die Bilderfassungsmittel (8, 9) koordiniert quer zur vorgegebenen Richtung (x) in Anpassung an eine Außenabmessung des Glaskörpers (1) verstellbar sind.

14. Vorrichtung nach einem der Ansprüche 9 bis 13, weiterhin umfassend:
ein Schattenbilderzeugungsmittel (12), wobei das Bild von der ersten oder zweiten Oberfläche des Glaskörpers getaktet erfasst wird und das Schattenbilderzeugungsmittel während Zeitintervallen, während denen kein Bild zur Detektion von Blasen und/oder Einschlüssen erfasst wird, einen Schatten des Glaskörpers (1) auf das Bilderfassungsmittel (8, 9) abbildet, sowie
eine Bildauswertungseinheit, die ausgelegt ist, um aus dem Bild des Schattens Ränder des Glaskörpers (1) zu identifizieren und Signalbeiträge der so identifizierten Ränder in dem Bild zur Detektion der Blasen und/oder Einschlüsse von der ersten oder zweiten Oberfläche des Glaskörpers (1) auszublenden.

15. Vorrichtung zur Herstellung von Glaskörpern mit einer vorbestimmten maximalen Dichte an Blasen und/oder Einschlüssen aus einem Glasstrang (1), der eine erste Oberfläche (2) und eine zu dieser beabstandete zweite Oberfläche (3) aufweist, mit:
a) einer Vorrichtung zum Detektieren von Blasen und/oder Einschlüssen in dem Glasstrang, die umfasst:
a1) Lichteinkopplungsmittel (21, 22), um einen Beleuchtungs-Lichtstrahl (15, 16) in einem Einkopplungsbereich (17, 18) auf der ersten oder zweiten Oberfläche (2, 3) des Glasstrangs, so in den Glasstrang einzukoppeln, dass sich Licht (27, 28) durch Vielfachreflexion an der ersten und zweiten Oberfläche (2, 3) in einer vorgegebenen Richtung (x) in dem Glasstrang ausbreitet, wobei der Beleuchtungs-Lichtstrahl in dem Einkopplungsbereich (17, 18) in einer Richtung quer zur vorgegebenen Richtung (x) eingekoppelt wird, und
a2) zumindest ein Bilderfassungsmittel (8, 9), um in einem Bcobachtungsvolumen (7) das zu dem Einkopplungsbereich (17, 18) in der vorgegebenen Richtung (x) beabstandet ist, ein Bild von der ersten oder zweiten Oberfläche (2, 3) des Glasstrangs (1) zu erfassen, das zur Detektion der Blasen und/oder Einschlüsse ausgewertet wird, wobei zumindest eine Blende (21, 22) mit einer Öffnung vorgesehen ist, durch die hindurch sich der Glaskörper (1) erstreckt und der Glaskörper (1) an dem Beobachtungsvolumen (7) vorbei bewegt wird, wobei die Blende das Bcobachtungsvolumen (7) von dem Einkopplungsbereich (17, 18) so trennt, dass das Bild in einer Dunkelfeldanordnung detektiert wird;
b) einem Fördermittel (v), um den Glasstrang (1) in der vorgegebenen Richtung (x) an dem Bilderfassungsmittel (8, 9) vorbei zu bewegen, wobei eine Bildauswertungseinheit vorgesehen ist, um auf der Grundlage des erfassten Bildes von der ersten oder zweiten Oberfläche des Glasstrangs (1) eine Dichte an Blasen und/oder Einschlüssen in dem Glasstrang zu ermitteln, und
eine Trenn- und Sortiereinrichtung vorgesehen ist, um den Glasstrang (1) in der vorgegebenen Richtung (x) in Glaskörper zu zerlegen und diejenigen Glaskörper, für die in dem Glasstrang eine Dichte an Blasen und/oder Einschlüssen bestimmt wird, die größer ist als die vorbestimmte maximale Dichte, auszusortieren.

## Claims

1. Method for the detection of bubbles and/or inclusions in a glass body (1), in particular in a wall (4) of a glass tube, which has a first surface (2) and a second surface (3) at a spacing therefrom, which are different at end-sides of the glass body (1), in which method:
an illuminating light beam (15, 16) is coupled in a coupling region (17, 18) on the first or second surface (2, 3) into the glass body (1) such that light (27, 28) is propagated by multiple reflection on the first and second surface (2, 3) in a prescribed direction (x) in the glass body, the illuminating light beam being coupled in the coupling region (17, 18) in a direction transverse relative to the prescribed direction (x), and
in an inspection volume (7) which is at a spacing from the coupling region in the prescribed direction (x), an image of the first or second surface (2, 3) of the glass body is detected and evaluated for the detection of bubbles and/or inclusions,
the glass body (1) being moved past the inspection volume (7) in the prescribed direction (x) and
at least one screen (21, 22), having an opening through which the glass body (1) extends and the glass body (1) is moved past the inspection volume (7), separating the inspection volume (7) from the coupling region (17, 18) such that the image is detected in a dark field arrangement.

2. Method according to claim 1, the light being coupled in at least two coupling regions (17, 18) into the glass body (1), which are provided at equal spacings (X1, X1') in the prescribed direction at a spacing and symmetrically relative to the inspection volume.

3. Method according to one of the preceding claims, the glass body (1) having a rod-shaped or tubular configuration and extending longitudinally in the prescribed direction (x), the image being detected by means of a plurality of image detection means (8, 9) which are disposed distributed about the first or second surface forming an outer circumferential surface of the glass body.

4. Method according to one of the preceding claims, the image being detected by means of a matrix (30) of light-sensitive elements (31) in order to detect the bubbles and/or inclusions in the glass body (1) with locality resolution, the matrix (30) being a one-dimensional matrix of light-sensitive elements (31) which are longer in the prescribed direction (x) than transversely thereto.

5. Method according to one of the preceding claims, the light being coupled in the respective coupling region (17, 18) into the glass body (1) such that the light is transmitted by reflection in the glass body (1) in the prescribed direction (x) at an angle which is less than the critical angle for total reflection on the respective surface (2, 3).

6. Method according to one of the preceding claims, light in the respective coupling region being radiated from a light guide (19, 20) or light guide bundle, the radiated light splaying out and being coupled into the glass body (1).

7. Method according to one of the preceding claims, illuminating means (19, 20) for illuminating the first and/or the second surface (2, 3) of the glass body (1) and image detection means (8, 9) for the detection of the image being adjusted, coordinated transversely relative to the prescribed direction (x) and adapted to an outer dimension of the glass body, a shadow of the glass body (1) being imaged during time intervals during which the image is not detected, onto a matrix of light-sensitive elements (31) in order to identify edges of the glass body (1), the image for the detection of bubbles and/or inclusions being detected such that signal contributions of the thus identified edges are masked,

8. Method for producing glass bodies having a predetermined maximum density of bubbles and/or inclusions, in which method
a) a glass strand (1) which has a first surface (2) and a second surface (3) at a spacing therefrom, which are different at end-sides of the glass strand (1), is provided and is moved past image detection means (8, 9) in a prescribed direction (x);
b) the density of bubbles and/or inclusions is determined by implementing the following steps:
b1) an illuminating light beam (15, 16) is coupled in a coupling region (17, 18) on the first or second surface (2, 3) into the glass strand (1) such that light (27, 28) is propagated by multiple reflection on the first and second surface (2, 3) in the prescribed direction (x) in the glass strand, the illuminating light beam being coupled in the coupling region (17, 18) in a direction transverse relative to the prescribed direction (x);
b2) in an inspection volume (7) which is at a spacing from the coupling region in the prescribed direction (x), an image of the first or second surface (2, 3) of the glass strand is detected; and
b3) the image is evaluated for the detection of bubbles and/or inclusions in order to determine the density of bubbles and/or inclusions, at least one screen (21, 22), having an opening through which the glass body (1) extends and the glass body (1) is moved past the inspection volume (7), separating the inspection volume (7) from the coupling region (17, 18) such that the image is detected in a dark field arrangement;
c) the glass strand (1) is broken into glass bodies in the prescribed direction (x); and
d) those glass bodies are discarded for which a density of bubbles and/or inclusions in the glass strand is determined, which density is greater than the predetermined maximum density.

9. Device for the detection of bubbles and/or inclusions in a glass body (1), in particular in a wall (4) of a glass tube which has a first surface (2) and a second surface (3) at a spacing therefrom, having:
light coupling means (21, 22) in order to couple an illuminating light beam (15, 16) in a coupling region (17, 18) into the glass body such that light (27, 28) is propagated by multiple reflection on the first and second surface (2, 3) in a prescribed direction (x) in the glass body, and
at least one image detection means (8, 9) in order to detect, in an inspection volume (7) which is at a spacing from the coupling region (17, 18) in the prescribed direction (x), an image of the first or second surface (2, 3) of the glass body (1) which is evaluated for the detection of bubbles and/or inclusions, **characterised in that**
a conveying means (v) is provided in order to move the glass body (1) in the prescribed direction (x) past the respective image detection means (8, 9), and
the light coupling means (21, 22) are designed in order to couple the illuminating light beam (15, 16) on the first or second surface (2, 3) into the glass body (1) such that light (27, 28) is propagated by multiple reflection on the first and second surface (2, 3) in the prescribed direction (x) in the glass body, the illuminating light beam being coupled in the coupling region (17, 18) in a direction transverse relative to the prescribed direction (x),
at least one screen (21, 22) being provided with an opening,
through which the glass body (1) extends and the glass body (1) is moved past the inspection volume (7), the screen separating the inspection volume (7) from the coupling region (17, 18) such that the image is detected in a dark field arrangement.

10. Device according to claim 9, having at least two light coupling means (21, 22) in order to couple the light in at least two coupling regions (17, 18) into the glass body (1), the light coupling means being provided at respectively equal spacings (X1, X1') in the prescribed direction (x) at a spacing and symmetrically relative to the inspection volume (7)

11. Device according to claim 9 or 10, a plurality of image detection means (8, 9) being disposed distributed about the first or second surface (2, 3) forming the outer circumferential surface of the glass body in order to detect the image of a glass body (1) which has a rod-shaped or tubular configuration and extends longitudinally in the prescribed direction (x).

12. Device according to one of the claims 9 to 11, the respective image detection means (8, 9) respectively comprising a matrix (30) of light-sensitive elements (31) in order to detect the bubbles and/or inclusions in the glass body (1) with locality resolution, the matrix (30) being a one-dimensional matrix of light-sensitive elements (31) which are longer in the prescribed direction (x) than transversely thereto.

13. Device according to one of the claims 9 to 12, the light coupling means (21, 22) and the image detection means (8, 9) being able to be adjusted, coordinated transversely relative to the prescribed direction (x) and adapted to an outer dimension of the glass body (1).

14. Device according to one of the claims 9 to 13, comprising furthermore:
a shadow image production means (12), the image of the first or second surface of the glass body being detected in a cycle and the shadow image production means imaging during time intervals, during which no image for the detection of bubbles and/or inclusions is detected, a shadow of the glass body (1) on the image detection means (8, 9), and also
an image evaluation unit which is designed in order to identify edges of the glass body (1) from the image of the shadow and in order to mask signal contributions of the thus identified edges in the image for the detection of bubbles and/or inclusions of the first or second surface of the glass body (1).

15. Device for producing glass bodies having a predetermined maximum density of bubbles and/or inclusions from a glass strand (1) which has a first surface (2) and a second surface (3) at a spacing therefrom, having:
a) a device for the detection of bubbles and/or inclusions in the glass strand which comprises:
a1) light coupling means (21, 22) in order to couple an illuminating light beam (15, 16) in a coupling region (17, 18) on the first or second surface (2, 3) of the glass strand into the glass strand such that light (27, 28) is propagated by multiple reflection on the first and second surface (2, 3) in a prescribed direction (x) in the glass strand, the illuminating light beam being coupled in the coupling region (17, 18) in a direction transversely relative to the prescribed direction (x), and
a2) at least one image detection means (8, 9) in order to detect, in an inspection volume (7) which is at a spacing from the coupling region (17, 18) in the prescribed direction (x), an image of the first or second surface (2, 3) of the glass strand (1) which is evaluated for the detection of bubbles and/or inclusions, at least one screen (21, 22) being provided with an opening, through which the glass body (1) extends and the glass body (1) is moved past the inspection volume (7), the screen separating the inspection volume (7) from the coupling region (17, 18) such that the image is detected in a dark field arrangement;
b) a conveying means (v) in order to move the glass strand (1) past the image detection means (8, 9) in the prescribed direction (x),
an image evaluation unit being provided in order to determine a density of bubbles and/or inclusions in the glass strand on the basis of the detected image of the first or second surface of the glass strand (1), and
a separating and sorting mechanism being provided in order to break up the glass strand (1) in the prescribed direction (x) into glass bodies and to discard those glass bodies for which a density of bubbles and/or inclusions in the glass strand is determined, which density is greater than the predetermined maximum density.

## Revendications

1. - Procédé pour détecter des bulles et/ou des inclusions dans un corps en verre (1), en particulier dans une paroi (4) d'un tube de verre, qui présente une première surface (2) et une seconde surface (3) espacée de la première, qui sont différentes par rapport aux côtés avant du corps en verre (1), procédé dans lequel :
un faisceau de lumière d'éclairage (15, 16) est injecté dans une zone d'injection (17, 18) sur la première ou la seconde surface (2, 3) dans le corps en verre (1), de telle sorte que de la lumière (27, 28) se propage dans le corps en verre par réflexion multiple sur la première et la seconde surface (2, 3) dans une direction prédéfinie (x), le faisceau de lumière d'éclairage étant injecté dans la zone d'injection (17, 18) dans une direction transversale à la direction prédéfinie (x) ; et
dans un volume d'observation (7), qui est espacé de la zone d'injection dans la direction prédéfinie (x), une image de la première ou de la seconde surface (2, 3) du corps en verre est enregistrée, laquelle est analysée pour la détection des bulles et/ou des inclusions,
le corps en verre (1) étant déplacé dans la direction prédéfinie (x) en passant devant le volume d'observation (7) ; et
au moins un cache (21, 22) doté d'une ouverture, à travers laquelle le corps en verre (1) s'étend et le corps en verre (1) est déplacé en passant devant le volume d'observation (7), séparant le volume d'observation (7) de la zone d'injection (17, 18) de telle sorte que l'image est détectée dans un agencement à fond noir.

2. Procédé selon la revendication 1, suivant lequel la lumière est injectée dans au moins deux zones d'injection (17, 18) dans le corps en verre (1), qui sont espacées à des intervalles identiques (X1, X1') dans la direction prédéfinie et sont prévues de façon symétrique par rapport au volume d'observation.

3. Procédé selon l'une des revendications précédentes, suivant lequel le corps en verre (1) est conçu en forme de barre ou de tube et est étendu dans la direction prédéfinie (x) dans le sens de la longueur, l'image étant détectée au moyen d'une pluralité de moyens d'enregistrement d'image (8, 9), lesquels sont disposés de façon répartie autour de la première ou de la seconde surface formant une surface périphérique extérieure du corps en verre.

4. Procédé selon l'une des revendications précédentes, suivant lequel l'image est enregistrée au moyen d'une matrice (30) d'éléments (31) sensibles à la lumière, afin de détecter les bulles et/ou les inclusions dans le corps en verre (1) avec une résolution locale, la matrice (30) étant une matrice unidimensionnelle d'éléments (31) sensibles à la lumière, qui sont plus longs dans la direction prédéfinie (x) que dans la direction transversale à celle-ci.

5. Procédé selon l'une des revendications précédentes, suivant lequel la lumière est injectée dans la zone d'injection (17, 18) respective dans le corps en verre (1), de telle sorte que la lumière est transmise par réflexion sous un angle, qui est inférieur à l'angle limite pour la réflexion totale sur la surface (2, 3) respective, dans le corps en verre (1) dans la direction prédéfinie (x).

6. Procédé selon l'une des revendications précédentes, suivant lequel de la lumière est diffusée dans la zone d'injection respective par un guide d'ondes optique (19, 20) ou un faisceau de fibres optiques, la lumière diffusée étant élargie et étant injectée dans le corps en verre (1).

7. Procédé selon l'une des revendications précédentes, suivant lequel des moyens d'éclairage (19, 20) destinés à l'éclairage de la première et/ou de la seconde surface (2, 3) du corps en verre (1) et des moyens d'enregistrement d'image (8, 9) destinés à l'enregistrement de l'image sont déplacés de façon coordonnée transversalement à la direction prédéfinie (x) dans l'adaptation à une dimension extérieure du corps en verre, une ombre du corps en verre (1) étant reproduite pendant des intervalles de temps pendant lesquels l'image n'est pas enregistrée, sur une matrice d'éléments (31) sensibles à la lumière, afin d'identifier des bords du corps en verre (1), l'image étant enregistrée pour la détection de bulles et/ou d'inclusions, de telle sorte que des contributions de signal des bords ainsi identifiés sont supprimées.

8. Procédé pour la imbrication de corps en verre avec une densité maximale prédéfinie de bulles et/ou d'inclusions, procédé suivant lequel
a) une barre de verre (1), qui présente une première surface (2) et une seconde surface (3) espacée de la première, qui sont différentes par rapport aux côtés avant de la barre de verre (1), est mise à disposition et est déplacée dans une direction prédéfinie (x) en passant devant des moyens d'enregistrement d'image (8, 9) ;
b) la densité de bulles et/ou d'inclusions est déterminée par la mise en oeuvre des étapes suivantes :
b1) un faisceau de lumière d'éclairage (15, 16) est injecté dans une zone d'injection (17, 18) sur la première ou la seconde surface (2, 3) dans la barre de verre (1), de telle sorte que de la lumière (27, 28) se propage par réflexion multiple sur la première et la seconde surface (2, 3) dans la direction prédéfinie (x) dans la barre de verre, le faisceau de lumière d'éclairage étant injecté dans la zone d'injection (17, 18) dans une direction transversale à la direction prédéfinie (x) ;
b2) dans un volume d'observation (7), qui est espacé de la zone d'injection dans la direction prédéfinie (x), une image de la première ou de la seconde surface (2, 3) de la barre de verre est enregistrée ; et
b3) l'image est analysée pour la détection des bulles et/ou des inclusions, afin de déterminer la densité de bulles et/ou d'inclusions, sachant qu'au moins un cache (21, 22) doté d'une ouverture, à travers laquelle le corps en verre (1) s'étend et le corps en verre (1) est déplacé en passant devant le volume d'observation (7), séparant le volume d'observation (7) de la zone d'injection (17, 18), de telle sorte que l'image est détectée dans un agencement à fond noir ;
c) la barre de verre (1) est décomposée dans la direction prédéfinie (x) en corps en verre ; et
d) les corps en verre, pour lesquels on détermine dans la barre de verre une densité de bulles et/ou d'inclusions qui est supérieure à la densité maximale prédéfinie, sont retirés.

9. Dispositif pour détecter des bulles et/ou des inclusions dans un corps en verre (1), en particulier dans une paroi (4) d'un tube de verre, qui présente une première surface (2) et une seconde surface (3) espacée de la première, comprenant :
- des moyens d'injection de lumière (21, 22) pour injecter un faisceau de lumière d'éclairage (15, 16) dans une zone d'injection (17, 18) dans le corps en verre, de telle sorte que de la lumière (27, 28) se propage par réflexion multiple sur la première et la seconde surface (2, 3) dans une direction prédéfinie (x) dans le corps en verre ; et
- au moins un moyen d'enregistrement d'image (8, 9) pour enregistrer dans un volume d'observation (7), qui est espacé de la zone d'injection (17, 18) dans la direction prédéfinie (x), une image de la première ou de la seconde surface (2, 3) du corps en verre (1), qui est analysée pour la détection des bulles et/ou des inclusions,
**caractérisé par le fait que**
- il est prévu un moyen de transport (v) pour déplacer le corps en verre (1) dans la direction prédéfinie (x) en passant devant le moyen d'enregistrement d'image concerné (8, 9) ; et
- les moyens d'injection de lumière (21, 22) sont conçus pour injecter le faisceau de lumière d'éclairage (15, 16) sur la première ou la seconde surface (2, 3) dans le corps en verre (1), de telle sorte que de la lumière (27, 28) se propage par réflexion multiple sur la première et la seconde surface (2, 3) dans la direction prédéfinie (x) dans le corps en verre, le faisceau de lumière d'éclairage étant injecté dans la zone d'injection (17, 18) dans une direction transversale à la direction prédéfinie (x), sachant qu'au moins un cache (21, 22) est prévu avec une ouverture, à travers laquelle le corps en verre (1) s'étend et le corps en verre (1) est déplacé en passant devant le volume d'observation (7), le cache séparant le volume d'observation (7) de la zone d'injection (17, 18), de telle sorte que l'image est détectée dans un agencement à fond noir.

10. Dispositif selon la revendication 9, comprenant au moins deux moyens d'injection de lumière (21, 22), pour injecter la lumière dans au moins deux zones d'injection (17, 18) dans le corps en verre (1), les moyens d'injection de lumière étant espacés dans la direction prédéfinie (x) à des intervalles respectivement identiques (X1, X1') et étant prévus de façon symétrique par rapport au volume d'observation (7).

11. Dispositif selon la revendication 9 ou 10, suivant lequel plusieurs moyens d'enregistrement d'image (8, 9) sont disposés de façon répartie autour de la première ou de la seconde surface (2, 3) formant une surface périphérique extérieure du corps en verre, pour enregistrer l'image d'un corps en verre (1) conçu en forme de barre ou de tube, étiré dans la longueur dans la direction prédéfinie (x).

12. Dispositif selon l'une quelconque des revendications 9 à 11, suivant lequel le moyen d'enregistrement d'image respectif (8, 9) comprend à chaque fois une matrice (30) d'éléments (31) sensibles à la lumière, afin de détecter les bulles et/ou les inclusions dans le corps en verre (1) avec une résolution locale, la matrice (30) étant une matrice unidimensionnelle d'éléments (31) sensibles à la lumière, qui, dans la direction prédéfinie (x), sont plus longs que dans la direction transversale à la première.

13. Dispositif selon l'une quelconque des revendications 9 à 12, suivant lequel les moyens d'injection de lumière (21, 22) et les moyens d'enregistrement d'image (8, 9) sont aptes à être réglés de façon coordonnée par rapport à la direction prédéfinie (x) par adaptation à une dimension extérieure du corps en verre (1).

14. Dispositif selon l'une des revendications 9 à 13, comprenant également :
- un moyen de génération de silhouette (12), l'image de la première ou de la seconde surface du corps en verre étant enregistrée de façon synchronisée et le moyen de génération de silhouette reproduisant une ombre du corps en verre (1) sur le moyen d'enregistrement d'image (B, 9) pendant des intervalles de temps pendant lesquels aucune image n'est enregistrée pour la détection de bulles et/ou d'inclusions ; et
- une unité d'analyse d'image qui est conçue pour identifier des bords du corps en verre (1) à partir de l'image de l'ombre et pour supprimer des contributions de signal des bords ainsi identifiés dans l'image pour la détection des bulles et/ou des inclusions de la première et de la seconde surface du corps en verre (1).

15. Dispositif de fabrication de corps en verre avec une densité maximale prédéfinie de bulles et/ou d'inclusions à partir d'une barre de verre (1), qui présente une première surface (2) et une seconde surface (3) espacée de la première, comprenant :
a) un dispositif pour détecter des bulles et/ou des inclusions dans la barre de verre, qui comprend :
a1) des moyens d'injection de lumière (21, 22) afin d'injecter un faisceau de lumière d'éclairage (15, 16) dans une zone d'injection (17, 18) sur la première ou la seconde surface (2, 3) de la barre de verre dans la barre de verre, de telle sorte que de la lumière (27, 28) se propage par réflexion multiple sur la première et la seconde surface (2, 3) dans une direction prédéfinie (x) dans la barre de verre, le faisceau de lumière d'éclairage étant injecté dans la zone d'injection (17, 18) dans une direction transversale à la direction prédéfinie (x) ; et
a2) au moins un moyen d'enregistrement d'image (8, 9), afin d'enregistrer- dans un volume d'observation (7), qui est espacé de la zone d'injection (17, 18) dans la direction prédéfinie (x), une image de la première ou de la seconde surface (2, 3) de la barre de verre (1), qui est analysée pour la détection des bulles et/ou des inclusions, sachant qu'au moins un cache (21, 22) est prévu avec une ouverture, à travers laquelle le corps verre (1) s'étend et le corps en verre (1) est déplacé en passant devant le volume d'observation (7), le cache séparant le volume d'observation (7) de la zone d'injection (17, 18), de telle sorte que l'image est détectée dans un agencement à fond sombre ;
b) un moyen de transport (v) pour déplacer la barre de verre (1) dans la direction prédéfinie (x) en passant devant le moyen d'enregistrement d'image (8, 9),
une unité d'analyse d'image étant prévue, afin de déterminer sur la base de l'image enregistrée de la première ou de la seconde surface de la barre de verre (1) une densité de bulles et/ou d'inclusions dans la barre de verre ; et
un dispositif de séparation et de tri étant prévu, afin de décomposer la barre de verre (1) dans la direction prédéfinie (x) en corps en verre et de trier les corps en verre pour lesquels on détermine dans la barre de verre une densité de bulles et/ou d'inclusions qui est supérieure à la densité maximale prédéfinie.
